# EUROPEAN PATENT APPLICATION

(11) **EP 2 410 778 A1**
(43) Date of publication of application: **25.01.2012**
(21) Application number: 10753110.5
(22) Date of filing: 15.03.2010
(51) Int. Cl.: H04W 16/00

(54) **METHOD AND DEVICE FOR UPLINK COOPERATIVE MULTI-POINT TRANSMISSION OF USER DATA**

(30) Priority: 16.03.2009 CN 200910047715
(71) Applicant: Alcatel Lucent, 75008 Paris (FR)
(72) Inventor: YOU, Mingli, Shanghai 201206 (CN); ZHU, Xudong, Shanghai 201206 (CN); YANG, Tao, Shanghai 201206 (CN)
(74) Representative: 2SPL Patentanwälte
(86) International application number: PCT/CN2010/071043
(87) International publication number: WO 2010/105543

(57) **Abstract**

The present invention provides an uplink progressive multi-point coordinated MIMO processing scheme. A coordinated processing management equipment determines whether it is necessary to send ACK or NACK message to neighboring base stations in the same CoMP cluster; when it is necessary to send ACK message to the neighboring base stations, the ACK message is sent to all the neighboring base stations in the cluster which have not participated in joint to inform each neighboring base stations that it is not necessary to send user data to the coordinated processing management equipment; when it is necessary to send NACK message to the neighboring base stations, the NACK message is sent to at least one neighboring base station in the cluster which has not participated in joint to inform the at least one base stations to send user data to the coordinated processing management equipment; according to the user data obtained by the base station and the user data from the at least one neighboring base stations, the coordinated processing management equipment performs joint detection and combination. Through the application of solution of the invention, the backhaul cost has been saved and the complexity of the |system realization is reduced.

## Description

### Field Of The Invention

The present invention relates to a communication network, more particularly, to a wireless coordinated multi-point transmission communication network.

### Background Of The Invention

Coordinated multi-point transmission (CoMP) has been accepted in LTE-Advanced as a scheme for improving the average and cell-edge throughput.

In the existing uplink transmission, there are at least two following types for realizing CoMP joint signal processing:
1) Network Multiple Input and Multiple Output (MIMO)
   In the coherent network MIMO with joint detection, both channel state information (CSI) and data should be sent to a coordinated multi-point transmission management equipment. Since its complexity is very huge, it has not been adopted in IEEE802.16m. This approach of network MIMO is more suitable to be realized in intra-base station, for example among the different sectors of a base station (BS).
2) Coordinated MIMO
   Multi-cell coordinated MIMO applies non-coherent distributed inter-cell interference suppression. The neighboring BSs only needs to send data to the coordinated multi-point transmission management equipment, but does not need to send CSI to the coordinated multi-point transmission management equipment. The scheme reduces the system complexity, since it only needs to exchange data among BSs, but does not need to exchange CSI. But exchanging data information among BSs still causes a large amount of backhaul cost.
   Backhaul means the backhaul network among BSs. BSs may exchange data and/or signaling via cable connection, microwave connection, etc.
   More specifically, in the existing CoMP scheme, according to the different detection strategy ( coherent detection or non-coherent detection ) and CoMP strategy( whether the neighboring BSs need to preprocess the received signal), the neighboring BSs send data and CSI or data to the serving BS. Then, the serving station performs the joint detection and combination according to the data and CSI or data received from the neighboring BSs.
   The scheme of CoMP uplink data transmission mentioned above causes a large of backhaul cost. And the joint processing complexity increases, since the serving BS need to cooperate with all the neighboring cells in a joint CoMP cluster to perform the joint detection and combination.

### Detailed Description Of The Invention

In light of those problems in the art, the present invention provides an uplink progressive multi-point coordinated MIMO processing scheme and its coordinated processing management equipment, that is, coordinated multi-point transmission management equipment. Multi-point coordinated joint signal processing can be realized step by step. According to whether data detection is right or not, the coordinated processing management equipment determines whether it is necessary to send ACK or NACK message to other neighboring BSs in the same CoMP cluster; when it is necessary for the coordinated processing management equipment to send ACK message to neighboring BSs, ACK message is sent to all the neighboring BSs in the CoMP cluster to inform each neighboring BS that it is not necessary to send user data to the coordinated processing management equipment; when it is necessary for the coordinated processing management equipment to send NACK message to neighboring BSs, NACK message is sent to at least one neighboring BS in the CoMP cluster to inform the at least one neighboring BS that it is necessary to send user data to the coordinated processing management equipment; according to the NACK message from the coordinated processing management equipment, the at least one neighboring BS sends user data to the coordinated processing management equipment; according to the user data obtained by the coordinated processing management equipment and the user data from the at least one neighboring BS, the coordinated process management equipment performs the joint detection and combination.

According to the first aspect of the present invention, an uplink progressive multi-point coordinated MIMO processing scheme is provided. Multi-point coordinated joint signal processing can be realized step by step. Wherein, a method of controlling user data of an uplink multi-point transmission mobile station in a coordinated multi-point transmission management equipment in a coordinated multi-point transmission network is provided, wherein one or more neighboring BSs in a CoMP cluster and the coordinated multi-point transmission management equipment serve the mobile station coordinately, the method comprises the steps of: determining whether it is necessary to send a first ACK message or a first NACK message to at least one of the one or more neighboring base stations; sending the first ACK message to all of the one or more neighboring base stations, when it is necessary to send the first ACK message to the at least one neighboring base station, wherein the first ACK message is used to indicate that the all neighboring base stations do not need to send the user data obtained by the neighboring base stations to the coordinated multi-point transmission management equipment.

According to the second aspect of the present invention, a method, in a neighboring base station in a coordinated multi-point transmission network, of coordinating a multi-point transmission management equipment to control user data of an uplink multi-point transmission mobile station is provided, the method comprising the steps of: determining whether ACK or NACK message is received from the coordinated multi-point transmission management equipment; discarding the user data, when ACK message is received from the coordinated multi-point transmission management equipment.

According to the third aspect of the present invention, a management apparatus of controlling user data of an uplink multi-point transmission mobile station in a coordinated multi-point transmission management equipment in a coordinated multi-point transmission network is provided, wherein, one or more base stations and the coordinated multi-point transmission management equipment serve the mobile station coordinately, the management apparatus comprises: a first determining means, for determining whether it is necessary to send a first ACK message or a first NACK message to at least one of the one or more neighboring base stations; a first sending means, for sending the first ACK message to all of the one or more neighboring base stations, when it is necessary to send the first ACK message to the at least one neighboring base station, wherein the first ACK message is used to indicate that the all neighboring base stations do not need to send the user data obtained by the neighboring base stations to the coordinated multi-point transmission management equipment.

According to the fourth aspect of the present invention, an assisting apparatus, in a neighboring base station in a coordinated multi-point transmission network, of coordinating a multi-point transmission management equipment to control user data of an uplink multi-point transmission mobile station is provided, the assisting apparatus comprises: a second determining means, for determining whether ACK or NACK message is received from the coordinated multi-point transmission management equipment; a flushing means, for discarding the user data, when ACK message is received from the coordinated multi-point transmission management equipment.

The application of the technology scheme provided in the present invention has the following advantages:

A flexible coordinated multi-point transmission mechanism is provided. Coordinated multi-point MIMO can be realized according to the progressive manner, and only HARQ ACK/NACK information is introduced to the coordinated multi-point, thereby on the premise of not reducing system performance, the backhaul cost needed by the coordinated multi-point transmission can be effectively reduced;

When the serving BS can detect the user data correctly, exchanging data through backhaul among the serving BS and neighboring BSs is avoided, thus the backhaul cost has been saved.

If the serving BS can detect user data correctly based on the local detection or after it combines a number of neighboring BSs to perform the joint detection, then unnecessary combination of more BSs for the joint detection can be avoided, thus the complexity of joint processing can be reduced.

### Description of Drawings

With reference to the following description to the non-limited embodiments of the figures, other features, aims and advantages of the present invention will be more apparent.
FIG.1 shows a schematic diagram of a network topology in a concrete application scenario of the present invention;
FIG.2 shows a method flowchart of serving BS 1a according to a detailed embodiment of the present invention;
FIG.3 shows a method flowchart of BS 1b according to a detailed embodiment of the present invention;
FIG.4 shows a method flowchart of BS 1b according to a varied detailed embodiment of the present invention;
FIG.5 shows an apparatus block diagram according to a detailed embodiment of the present invention;

Wherein, through different figures above, same or similar reference numerals refer to same or similar step features or functions/modules.

### Detailed description of embodiments

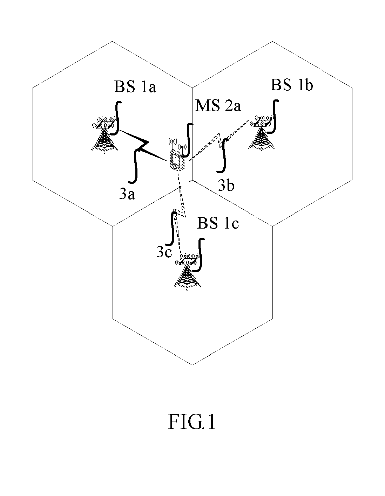

FIG.1 shows a schematic diagram of a network topology in a concrete application scenario of the present invention. Wherein, BS 1a is the serving BS of mobile station (MS) 2a, BS 1b and BS 1c are the neighboring BSs of BS 1a, and they and serving BS 1a serve MS 2a coordinately. Serving BS 1a in the present invention both completes processing and transmission of the data service, in the meanwhile is responsible for the control function of coordinated multi-point transmission, equivalent to a coordinated multi-point transmission management equipment. FIG.1 further shows the communication links between BS 1a, BS 1b, BS 1c and MS 2a respectively, which are represented by lightning symbols. 3a represents the communication link between BS 1a and MS 2a, 3b represents the communication link between BS 1b and MS 2a, 3c represents the communication link between BS 1c and MS 2a, wherein link 3a is the communication link between serving BS 1a and MS 2a, thus link 3a is the serving radio link of MS 2a, and both links 3b and 3c are non-serving radio link.

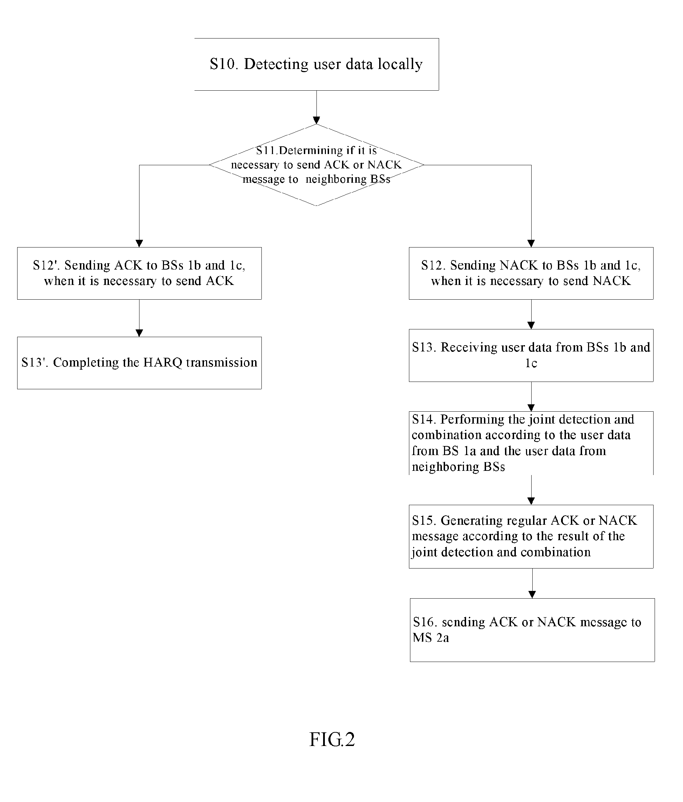

FIG.2 shows a method flowchart of serving BS 1a according to a detailed embodiment of the present invention. In the following, with reference to FIG.2 and in conjunction with FIG.1, a detailed embodiment of serving BS 1a of the present invention is described in details.

Firstly, CoMP cell is defined. If a MS is located at the edge of a cell and a plurality of BSs can receive the signal from the MS, the plurality of BSs construct the CoMP cell of the MS according to the wireless position of them and MS, wherein, the plurality of BSs includes both the serving BS of the MS, and the neighboring BSs of the serving BS.

In step S10, serving BS 1a detect user data locally.
- If BS 1a only needs to detect the user data of MS 2a at this time, that is, BS 1a only serves MS 2a at this time, the corresponding detection approach of BS 1a is single user detection. In the traditional single user receiver, match correlation is applied for each single user to detect respective signals. For example, serving BS 1a may apply maximum ratio combining (MRC) to detect user data.
- If BS 1a needs to detect the user data of a plurality of MSs at the same time, for example, including both a plurality of MSs in a cell, and MS across the cells, for example, MS 2a at the edge of the cell, BS 1a applies multi-user detection approach. The so-called multi-user detection is that the information of a plurality of users is utilized to implement reception or data detection for each single user. Multi-user detection technology fully utilizes the related channel information between BS multi-antenna system and respective user transmission antenna, obtains the information of single user through the joint detection, thereby obtaining the best decision effect. For example, serving BS 1a may apply minimum mean square error detection (MMSE Detection)or minimum mean square error-successive interference cancellation (MMSE-SIC Detection), decorrelating detection, i.e. zero-forcing multiple user detection (ZF MUD), parallel interference cancellation or decorrelating decision feedback (DDF), best multi-user detection, i.e. maximum likelihood sequence estimation (MLSE). Of course, the detection approach applied by BS 1a is not limited to the approaches mentioned above. BS 1a may also apply other detection approaches.

Then, BS 1a checks the detected data, and the result of the check includes the following two situations:

### Situation one: ACK

If BS 1a checks the detected data, for example, applies cyclic redundancy check approach, and the check result is correct, that is, BS 1a can detect user data correctly, the method continues to step S12'. BS 1a sends ACK message to all neighboring BSs 1b and 1c, the ACK message being used to indicate neighboring BSs 1b and 1c that it is not necessary to send the obtained user data of neighboring BS 1b and 1c to BS 1a.

Then, the method continues to step S13', BS 1a ends the hybrid automatic repeat request (HARQ) transmission.

If HARQ repeat mechanism supports synchronous retransmission, BS 1a waits until the predefined time slot reaches to transmit ACK message to MS 2a. In another embodiment, if BS supports asynchronous HARQ retransmission, that is ACK or NACK message from BS is allowed to reach MS 2a at the non-preset time, BS 1a can send ACK message to MS immediately after it determines that the data of MS 2a has been received correctly, MS can adjust the time slot of its sending data correspondingly to further reduce latency.

### Situation two: NACK

If BS 1a checks the detected data, for example, applies cyclic redundancy check approach, and the check result is wrong, the method continues to step S12. BS 1a sends NACK message to all neighboring BSs 1b and 1c in the CoMP cluster, the NACK message being used to indicate neighboring BSs 1b and 1c that it is necessary to send the user data obtained by neighboring BSs 1b and 1c to BS 1a.

Then, the method continues to step S 13, BS 1a receives user data from BS 1b and BS 1c.

In the following, for coherent detection and non-coherent detection, two types of detection approach, the detailed contents included in the user data from BS 1b and BS 1c are described respectively as follows:

### ➢ Coherent detection:

If the CoMP network supports coherent detection, the user data from BS 1b and BS 1c obtained by BS 1a should include at least following two parts: data and CSI.
- The data may be the signal symbol quantified value after signal preprocessing, or may be the sample value of the original data.
- CSI is the CSI respectively estimated by BS 1b and BS 1c according to the pilot information from MS.

### ➢ Non-Coherent detection:

If the CoMP network supports non-coherent detection, the user data from BS 1b and BS 1c obtained by BS 1a should include: soft bit information.

The soft bit information is the output information from the Turbo decoder of BS 1b and BS 1c.

Then, the method continues to step S14, BS 1a performs the joint detection and combination according to the user data detected locally and the data from BS 1b and BS 2c.

### ➢ There are two different situations for coherent detection:

1) BS 1a receives the signal symbol quantified value of MS 2a after the signal preprocessing detected respectively by and from BS 1b and 1c, therefore, according to the CSI between BS 1a and MS 2a estimated from the pilot information of MS 2a, the CSI between BS 1b and MS 2a reported by BS 1b, the CSI between BS 1c and MS 2a reported by BS 1c and the signal symbol quantified value from MS 2a after the signal preprocessing detected locally, the signal symbol quantified value after the signal preprocessing from MS 2a detected respectively by and from BS 1b and 1c, BS 1a performs the joint detection and combination.
2) or, BS 1 receives the sample value of the original data of MS 2a obtained and reported respectively by BS 1b and 1c. Therefore, according to the CSI between BS 1a and MS 2a estimated from the pilot information of MS 2a, the CSI between BS 1b and MS 2a reported by BS 1b, the CSI between BS 1c and MS 2a reported by BS 1c and the sample value of the original data from MS 2a obtained locally, and the sample values of the original data from MS 2a obtained and reported respectively by BS 1b and 1c, BS 1a performs the joint detection and combination.

For the situations 1) and 2) mentioned above of coherent detection, if it is single user detection, the joint detection and combination may use MRC detection, if it is multi-user detection, the joint detection and combination may use MMSE detection or MMSE-SIC detection. Of course, joint detection and combination algorithm is not limit to the examples above.

### ➢ Non-coherent detection

BS 1a performs soft bit combination according to the soft bit information from BS 1b and BS 1c and the soft bit information generated after B1a performs signal processing for the signal received from MS 2a.

If HARQ retransmission supports asynchronous retransmission, if BS 1a detects or still does not detect user data correctly after BS 1a combines the user data of MS 2a reported by neighboring BSs 1b and 1c, in step S15, BS 1a generates ACK or NACK message according to the result of the joint detection and combination; then, in step S16, BS 1a sends the ACK or NACK message immediately to MS 2a to trigger the regular HARQ retransmission or new data sending, without waiting until the arrival of the specified time slot.

If BS 1a supports strict synchronous HARQ retransmission mechanism, BS 1a can go to step S16 and send ACK or NACK message to MS 2a until the specified time slot for reporting ACK/NACK comes.

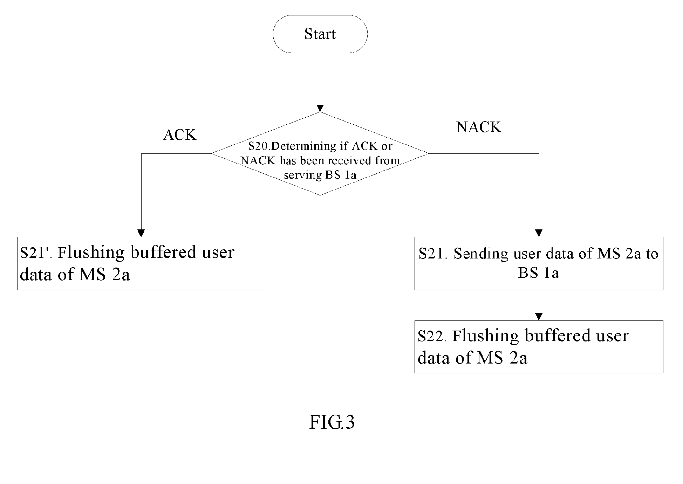

The method performed by serving BS 1a is described in detail above. In the following, from the viewpoint of neighboring BSs, the detailed embodiments of the present invention are described. It is understandable, since the operation performed by the neighboring BSs is similar basically, only the operation of BS 1b is described. Since the operation of BS 1c is similar to the operation of BS 1b, it will be not described here. With reference to FIG.3, a detailed embodiment of BS 1b according to an embodiment of the present invention is described in detail.

Firstly, in step S20, BS 1b determines whether ACK or NACK from serving BS 1a is received.

If BS 1b determines that ACK message is received from BS 1a, the method continues to step S21', BS 1b flushes buffered user data of MS 2a;

If BS 1b determines that NACK message is received from BS 1a, the method continues to step S21, BS 1b sends user data to MS 2a. According to the difference of the detection approach, the content included in the user data is different, more specifically, it can be divided into at least following two situations:

### ➢ Coherent detection:

If the CoMP network supports coherent detection, the user data sent by BS 1b to BS 1a should include at least following two parts: data and CSI.
- The data can be signal symbol quantified value after the signal preprocessing, for example, interference cancellation. The signal symbol quantified value is the output after the channel detection;

And it may also be the sample value of the original data, that is, the output baseband sample symbol of analog-digital converter (ADC), and the sample symbol is the original output data that has not been processed by BS 1b.
- CSI is the CSI from MS 2a to BS 1b estimated by BS 1b according to the pilot information from MS 2a.

### ➢ Non-coherent detection:

If the CoMP network supports non-coherent detection, the user data sent by BS 1b to BS 1a is soft bit information. The soft bit information is the output after the channel detection.

The soft bit information is the soft bit information, which is the output of the signal received by BS 1b after ADC, channel estimation, equalization, demodulating and Turbo decoder. The so-called soft bit information is multi-bit information obtained after the soft decision, in relative to one bit information 0 and 1 of the hard decision.

After BS 1b sends user data to BS 1a, the method continues to step S22, BS 1b flushes buffered user data of MS 2a.

In the embodiment of BS 1a mentioned above, in step S11, when BS 1a determines that it is necessary to send NACK message, BS 1a sends NACK message to all neighboring BSs 1b and 1c in the CoMP cluster, to inform BS 1b and BS 1c to send user data so as to enable BS 1a to perform the joint detection and combination according to the user data collected by a plurality of BSs respectively, In a varied embodiment, a progressive joint detection and combination approach will be described, that is, serving BS 1a requests the neighboring BSs to send user data collected respectively and participate in the joint detection and combination one by one or multiple by multiple.

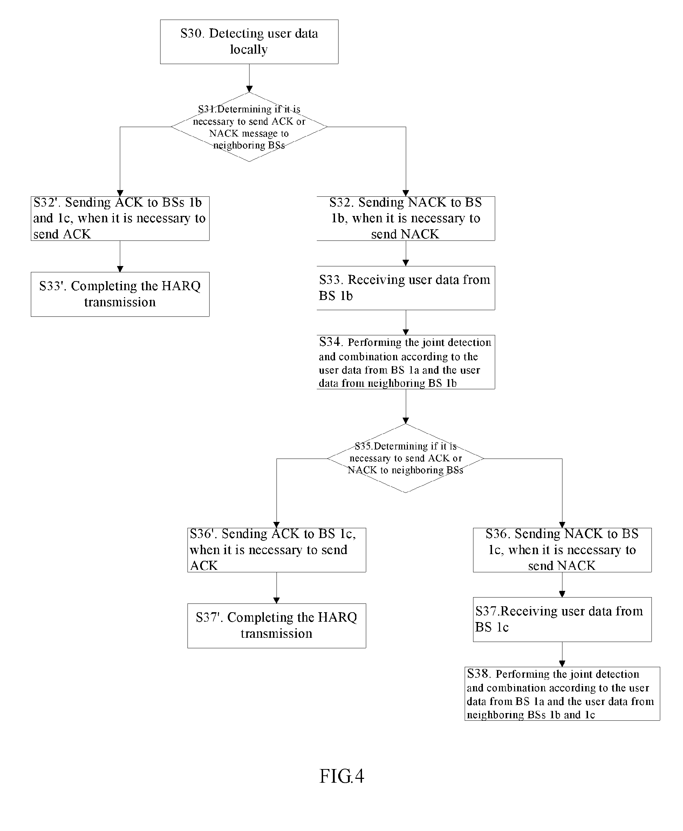

In the following, with reference to FIG.4, the varied embodiment will be described in detail. Since step S30, step S31, step S32' and step S33' are similar to step S10, step S11, step S12' and step S13' described above respectively, they will not be described here.

In step 31, if BS 1a determines that it is necessary to send NACK message to the neighboring BSs, BS 1a selects to send NACK message to one or more BSs in the CoMP cluster in which MS 2a is located.

The selection strategy of BS 1a includes at least following two types:

### I) According to position related information

When MS 2a performs ranging, including initial ranging when MS 2a is accessed or periodical ranging or handover ranging, MS 2a may measure the position relationship relative to each BS, and report the position related information to serving BS 1a. Serving BS 1a can select one or more neighboring BSs which are closest to MS 2a to send them NACK message, so as to indicate the one or more neighboring BSs to send user data to serving BS 1a. In the present embodiment, BS 1b is the closest to MS 2a, and the signal strength between them is the strongest. Therefore, serving BS 1a sends NACK message to BS 1b to indicate BS 1b to send user data.

Herein, serving BS 1a does not sent NACK message to BS 1c, therefore, BS 1c will not send user data to serving BS 1a, thus avoiding the backhaul cost.

### II) According to the sequence number of the arrangement

BS 1a can select sequence number for the neighboring BSs randomly, for example, sequence number 0 for neighboring BS 1b, sequence number 1 for neighboring BS 1c, and so forth.

Then, according to the ascending order of the sequence number, or the descending order of the sequence number, BS 1a selects the neighboring BSs for combining. In the present embodiment, BS 1a combines BS 1b firstly.

Then, the method continues to step S34, according to the user data from BS 1a and the user data from BS 1b, BS 1a performs the joint detection and combination. Since the step is similar to step S14 described above, it will not be described in detail here.

Then, the method continues to step S35, BS 1a determines whether the user data can be detected correctly. The determining step is similar to step S 11 describe above. Thus, it will not be described in detail here.

When BS 1a determines that it is necessary to send ACK message, in step S36', BS 1a sends ACK message to all the neighboring BSs in the CoMP cluster which have not participated in the joint detection and combination. For example, in the embodiment, BS 1a sends ACK message to other neighboring BS 1c which has not participated in the joint detection and combination, then, in step S37', BS 1a completes the HARQ transmission.

When BS 1a determines that it is necessary to send NACK message, BS 1a needs to further determine which BSs the NACK message is send to. BS 1a needs to send NACK message to one or more other neighboring BSs which have not participated in the joint detection and combination, that is, have not sent data to BS 1a, so as to inform, the one or more other neighboring BSs which have not sent data to BS 1a, to send the user data obtained respectively, so as to enable serving BS 1a to perform the joint detection and combination. The strategy that BS 1a selects the neighboring BSs to send user data has been described above; therefore it will not be described in detail here. For example, in the step, BS 1a selects BS 1c to send its obtained user data, that is, BS 1a sends NACK message to BS 1c.

Then, in step S37, BS 1a receives user data from BS 1c. Then, in step S38, according to the user data from BS 1a and user data from neighboring BSs 1b and 1c, BS 1a performs the joint detection and combination.

Then, the method executes step S35 and the following steps repeatedly, until any one of the following predetermined condition is fulfilled:
- BS 1a combines all the neighboring BSs which serve MS 2a to perform the joint detection and combination;
- BS 1a combines partial neighboring BSs which serve MS 2a to perform the joint detection and combination, and detects user data correctly, for example, check passed;
- the time for sending ACK or NACK message to MS 2a reaches. For example, for the synchronous HARQ retransmission BS, the time when each BS sends NACK or ACK message to MS is strictly regulated. When the time reaches, if BS 1a still has not detected user data correctly, BS 1a needs to send NACK message to MS 2a; if user data has been detected correctly, BS 1a sends ACK message to MS 2a.

In the above each embodiments, the example, in which a coordinated multi-point transmission management equipment includes the serving BS, has been described. Of course, the coordinated multi-point transmission management equipment may also be a central processing unit to mange the signaling and data exchange for the coordinated multi-point transmission.

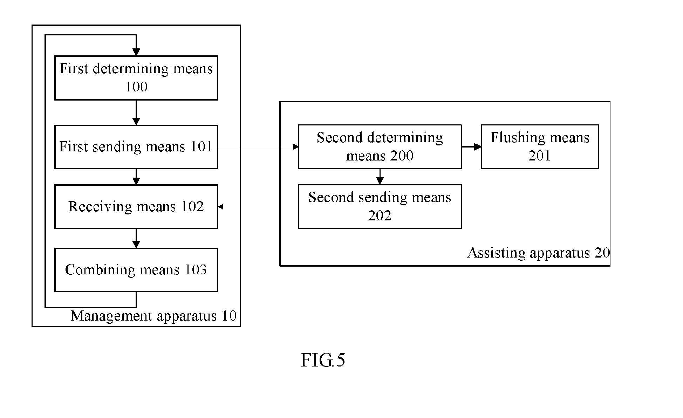

FIG.5 shows an apparatus block diagram according to a detailed embodiment of the present invention. In the following, with reference to FIG.5 and in conjunction with FIG.1, the apparatus embodiments of serving BS 1a and neighboring BS 1b of the present invention will be described in detail.

Wherein, serving BS 1a includes a management apparatus 10. The management apparatus 10 includes a first determining means 100, a first sending means 101, a receiving means 102 and combining means 103.

Wherein, neighboring BSs 1b and 1c include an assisting apparatus 20. The assisting apparatus 20 further includes a second determining means 200, a flushing means 201 and a second sending means 202.

Firstly, CoMP cell is defined. If a MS is located at the edge of a cell and a plurality of BSs can receive the signal from the MS, the plurality of BSs construct the CoMP cell of the MS according to the wireless position of them and MS, wherein, the plurality of BSs includes both the serving BS of the MS, and the neighboring BSs of the serving BS.

Serving BS 1a detect user data locally.
- If BS 1a only needs to detect the user data of MS 2a at this time, that is, BS 1a only serves MS 2a at this time, the corresponding detection approach of BS 1a is single user detection. In the traditional single user receiver, match correlation is applied for each single user to detect respective signals. For example, serving BS 1a may apply maximum ratio combining (MRC) to detect user data.
- If BS 1a needs to detect the user data of a plurality of MSs at the same time, for example, including both a plurality of MSs in a cell, and MS across the cells, for example, MS 2a at the edge of the cell, BS 1a applies multi-user detection approach. The so-called multi-user detection is that the information of a plurality of users is utilized to implement reception or data detection for each single user. Multi-user detection technology fully utilizes the related channel information between BS multi-antenna system and respective user transmission antenna, obtains the information of single user through the joint detection, thereby obtaining the best decision effect. For example, serving BS 1a may apply minimum mean square error detection (MMSE Detection)or minimum mean square error-successive interference cancellation (MMSE-SIC Detection), decorrelating detection, i.e. zero-forcing multiple user detection (ZF MUD), parallel interference cancellation or decorrelating decision feedback (DDF), best multi-user detection, i.e. maximum likelihood sequence estimation (MLSE). Of course, the detection approach applied by BS 1a is not limited to the approaches mentioned above. BS 1a may also apply other detection approaches.

Then, BS 1a checks the detected data, and the result of the check includes the following two situations:

### Situation one: ACK

If the first determining means 100 checks the detected data, for example, applies cyclic redundancy check approach, and the check result is correct, that is, BS 1a can detect user data correctly, the first sending means 101 sends ACK message to all neighboring BSs 1b and 1c, the ACK message being used to indicate neighboring BSs 1b and 1c that it is not necessary to send the obtained user data of neighboring BS 1b and 1c to BS 1a.

Then, BS 1a ends the hybrid automatic repeat request (HARQ) transmission.

If HARQ repeat mechanism supports synchronous retransmission, BS 1a waits until the predefined time slot reaches to transmit ACK message to MS 2a. In another embodiment, if BS supports asynchronous HARQ retransmission, that is ACK or NACK message from BS is allowed to reach MS 2a at the non-preset time, BS 1a can send ACK message to MS immediately after it determines that the data of MS 2a has been received correctly, MS can adjust the time slot of its sending data correspondingly to further reduce latency.

### Situation two: NACK

If the first determining means 100 checks the detected data, for example, applies cyclic redundancy check approach, and the check result is wrong, the first sending means 101 sends NACK message to all neighboring BSs 1b and 1c in the CoMP cluster, the NACK message being used to indicate neighboring BSs 1b and 1c that it is necessary to send the user data obtained by neighboring BSs 1b and 1c to BS 1a.

Then, the second determining means 200 of BS 1b determines whether ACK or NACK from serving BS 1a is received.

If the second determining means 200 determines that ACK message is received from BS 1a, the flushing means 201 flushes buffered user data of MS 2a;

If the second determining means 200 determines that NACK message is received from BS 1a, the second sending means 202 sends user data to MS 2a. According to the difference of the detection approach, the content included in the user data is different, more specifically, it can be divided into at least following two situations:

### ➢ Coherent detection:

If the CoMP network supports coherent detection, the user data sent by the second sending means 202 to BS 1a should include at least following two parts: data and CSI.
- The data can be signal symbol quantified value after the signal preprocessing, for example, interference cancellation. The signal symbol quantified value is the output after the channel detection;

And it may also be the sample value of the original data, that is, the output baseband sample symbol of analog-digital converter (ADC), and the sample symbol is the original output data that has not been processed by BS 1b.
- CSI is the CSI from MS 2a to BS 1b estimated by BS 1b according to the pilot information from MS 2a.

### ➢ Non-coherent detection:

If the CoMP network supports non-coherent detection, the user data sent by BS 1b to BS 1a is soft bit information. The soft bit information is the output after the channel detection.

The soft bit information is the soft bit information, which is the output of the signal received by BS 1b after ADC, channel estimation, equalization, demodulating and Turbo decoder. The so-called soft bit information is multi-bit information obtained after the soft decision, in relative to one bit information 0 and 1 of the hard decision.

After the second sending means 202 sends user data to BS 1a, BS 1b flushes buffered user data of MS 2a.

Then, the receiving means 102 of BS 1a receives user data from BS 1b and BS 1c.

In the following, for coherent detection and non-coherent detection, two types of detection approach, the detailed contents included in the user data from BS 1b and BS 1c are described respectively as follows:

### ➢ Coherent detection:

If the CoMP network supports coherent detection, the user data from BS 1b and BS 1c obtained by the receiving means 102 should include at least following two parts: data and CSI.
- The data may be the signal symbol quantified value after signal preprocessing, or may be the sample value of the original data.
- CSI is the CSI respectively estimated by BS 1b and BS 1c according to the pilot information from MS.

### ➢ Non-Coherent detection:

If the CoMP network supports non-coherent detection, the user data from BS 1b and BS 1c obtained by the receiving means 102 should include: soft bit information.

The soft bit information is the output information from the Turbo decoder of BS 1b and BS 1c.

Then, the combining means 103 performs the joint detection and combination according to the user data detected locally and the data from BS 1b and BS 2c.

### ➢ There are two different situations for coherent detection:

1) The receiving means 102 receives the signal symbol quantified value of MS 2a after the signal preprocessing detected respectively by and from BS 1b and 1c, therefore, according to the CSI between BS 1a and MS 2a estimated from the pilot information of MS 2a, the CSI between BS 1b and MS 2a reported by BS 1b, the CSI between BS 1c and MS 2a reported by BS 1c and the signal symbol quantified value from MS 2a after the signal preprocessing detected locally, the signal symbol quantified value after the signal preprocessing from MS 2a detected respectively by and from BS 1b and 1c, the combining means 103 performs the joint detection and combination.
2) or, BS 1 receives the sample value of the original data of MS 2a obtained and reported respectively by BS 1b and 1c. Therefore, according to the CSI between BS 1a and MS 2a estimated from the pilot information of MS 2a, the CSI between BS 1b and MS 2a reported by BS 1b, the CSI between BS 1c and MS 2a reported by BS 1c and the sample value of the original data from MS 2a obtained locally, and the sample values of the original data from MS 2a obtained and reported respectively by BS 1b and 1c, the combining means 103 performs the joint detection and combination.

For the situations 1) and 2) mentioned above of coherent detection, if it is single user detection, the joint detection and combination used by the combining means 103 may use MRC detection, if it is multi-user detection, the joint detection and combination used by the combining means 103 may use MMSE detection or MMSE-SIC detection. Of course, joint detection and combination algorithm is not limit to the examples above.

### ➢ Non-coherent detection

The combining means 103 performs soft bit combination according to the soft bit information from BS 1b and BS 1c and the soft bit information generated after B1a performs signal processing for the signal received from MS 2a.

If HARQ retransmission supports asynchronous retransmission, if the combining means 103 detects or still does not detect user data correctly after the combining means 103 combines the user data of MS 2a reported by neighboring BSs 1b and 1c, BS 1a generates ACK or NACK message according to the result of the joint detection and combination; then, BS 1a sends the ACK or NACK message immediately to MS 2a to trigger the regular HARQ retransmission or new data sending, without waiting until the arrival of the specified time slot.

If BS 1a supports strict synchronous HARQ retransmission mechanism, BS 1a can send ACK or NACK message to MS 2a until the specified time slot for reporting ACK/NACK comes.

In the embodiment of BS 1a mentioned above, when the first determining means 100 determines that it is necessary to send NACK message, the first sending means 101 sends NACK message to all neighboring BSs 1b and 1c in the CoMP cluster, to inform BS 1b and BS 1c to send user data so as to enable BS 1a to perform the joint detection and combination according to the user data collected by a plurality of BSs respectively, In a varied embodiment, a progressive joint detection and combination approach will be described, that is, serving BS 1a requests the neighboring BSs to send user data collected respectively and participate in the joint detection and combination one by one or multiple by multiple.

Still with reference to FIG.5, if the first determining means 100 in BS 1a determines that it is necessary to send NACK message to the neighboring BSs, BS 1a selects to send NACK message to one or more BSs in the CoMP cluster in which MS 2a is located.

The selection strategy of BS 1a includes at least following two types:

### I) According to position related information

When MS 2a performs ranging, including initial ranging when MS 2a is accessed or periodical ranging or handover ranging, MS 2a may measure the position relationship relative to each BS, and report the position related information to serving BS 1a. Serving BS 1a can select one or more neighboring BSs which are closest to MS 2a to send them NACK message, so as to indicate the one or more neighboring BSs to send user data to serving BS 1a. In the present embodiment, BS 1b is the closest to MS 2a, and the signal strength between them is the strongest. Therefore, serving BS 1a sends NACK message to BS 1b to indicate BS 1b to send user data.

Herein, serving BS 1a does not sent NACK message to BS 1c, therefore, BS 1c will not send user data to serving BS 1a, thus avoiding the backhaul cost.

### II) According to the sequence number of the arrangement

BS 1a can select sequence number for the neighboring BSs randomly, for example, sequence number 0 for neighboring BS 1b, sequence number 1 for neighboring BS 1c, and so forth.

Then, according to the ascending order of the sequence number, or the descending order of the sequence number, BS 1a selects the neighboring BSs for combining. In the present embodiment, BS 1a combines BS 1b firstly.

Then, according to the user data from BS 1a and the user data from BS 1b, the combining means 103 performs the joint detection and combination. Since the steps executed by the combining means 103 have been described above, it will not be described in detail here.

Then, the first determining means 100 determines whether the user data can be detected correctly. Since the steps executed by the first determining means 100 have been described above, it will not be described in detail here.

When the first determining means 100 determines that it is necessary to send ACK message, the first sending means 101 sends ACK message to all the neighboring BSs in the CoMP cluster which have not participated in the joint detection and combination. For example, in the embodiment, the first sending means 101 sends ACK message to other neighboring BS 1c which has not participated in the joint detection and combination, then, BS 1a completes the HARQ transmission.

When the first determining means 100 determines that it is necessary to send NACK message, the first determining means 100 needs to further determine which BSs the NACK message is send to. The first sending means 101 needs to send NACK message to one or more other neighboring BSs which have not sent data to BS 1a, so as to inform, the one or more other neighboring BSs which have not sent data to BS 1a, to send the user data obtained respectively, so as to enable serving BS 1a to perform the joint detection and combination. The strategy that BS 1a selects the neighboring BSs to send user data has been described above; therefore it will not be described in detail here. For example, BS 1a selects BS 1c to send its obtained user data.

Then, the receiving means 102 receives user data from BS 1c. Then, according to the user data from BS 1a and user data from neighboring BSs 1b and 1c, the combining means 103 performs the joint detection and combination.

Then, the first determining means 100, the first sending means 110, the receiving means 102 and the combining means 103 execute the respective operation repeatedly, until any one of the following predetermined condition is fulfilled:
- BS 1a combines all the neighboring BSs which serve MS 2a to perform the joint detection and combination;
- BS 1a combines partial neighboring BSs which serve MS 2a to perform the joint detection and combination, and detects user data correctly, for example, check passed;
- the time for sending ACK or NACK message to MS 2a reaches. For example, for the synchronous HARQ retransmission BS, the time when each BS sends NACK or ACK message to MS is strictly regulated. When the time reaches, if BS 1a still has not detected user data correctly, BS 1a needs to send NACK message to MS 2a; if user data has been detected correctly, BS 1a sends ACK message to MS 2a.

In the above each embodiments, the example in which a coordinated multi-point transmission management equipment includes the serving BS, has been described. Of course, the coordinated multi-point transmission management equipment may also be a central processing unit to mange the signaling and data exchange for the coordinated multi-point transmission. Furthermore, the coordinated multi-point transmission management equipment can further include the serving BS used to manage the different sectors inside a BS.

### Performance Analysis

In the system simulation, the parameters selected can be referred in the published Tdoc R1-090770. According to post-SINR, the corresponding joint modulation and coding scheme (MCS) is selected, that is, according to the sum of the SINR between the links of all the BSs in the CoMP cluster serving a CoMP user and the user, the corresponding MCS is selected, therefore guaranteeing not bringing loss to frequency spectrum utilization of the link. Through the system simulation, it can be obtained that the local failed detection rate by the serving BS is 0.600968. That is, this kind of approach can save 40% backhaul cost.

The embodiments of the present invention have been described above. But the present invention is not limited to the specific systems, equipments and detailed protocols. Those skilled in the art may perform various variation or modification in the protection scope of the claims.

## Claims

1. A method of controlling user data of an uplink multi-point transmission mobile station in a coordinated multi-point transmission management equipment in a coordinated multi-point transmission network, wherein, one or more neighboring base stations and the coordinated multi-point transmission management equipment serve the mobile station coordinately, the method comprises the steps of:
a. determining whether it is necessary to send a first ACK message or a first NACK message to at least one of the one or more neighboring base stations;
b. sending the first ACK message to all of the one or more neighboring base stations, when it is necessary to send the first ACK message to the at least one neighboring base station, wherein the first ACK message is used to indicate that the all neighboring base stations do not need to send the user data obtained by the neighboring base stations to the coordinated multi-point transmission management equipment.

2. A method according to claim 1, wherein after step a, the method comprises the step of:
b'. sending the first NACK message to the at least one neighboring base station, when it is necessary to send the first NACK message to the at least one neighboring base station, wherein the first NACK message is used to indicate that the at least one neighboring base station needs to send the user data obtained by the at least one neighboring base station to the coordinated multi-point transmission management equipment.

3. A method according to claim 1 or 2, wherein before step a, the method comprises the steps of:
i1. determining whether the user data can be detected correctly through local detection;
i2. determining that it is necessary to send the all neighboring base stations the first ACK message, if the user data can be detected correctly; determining that it is necessary to send the first NACK message to the at least one neighboring base station, if the user data cannot be detected correctly.

4. A method according to claim 2, wherein after step b', the method further comprises the steps of:
c'. receiving user data from the at least one neighboring base station;
d'. performing joint detection and combination, according to user data in the coordinated multi-point transmission management equipment and user data from the at least one neighboring base station.

5. A method according to claim 4, wherein after step d', the method further comprises the steps of:
e1. determining whether the user data can be obtained correctly according to the joint detection and combination;
e2. determining that it is necessary to send a second ACK message to all other neighboring base stations which have not participated in the joint detection and combination, if the user data can be obtained correctly;
e2'. determining that it is necessary to send a second NACK message to at least one of the other neighboring base stations which have not participated in the joint detection and combination, if the user data cannot be obtained correctly;
f. receiving user data from the at least one of the other base stations which have not participated in the joint detection and combination;
g. setting the at least one neighboring base stations and the at least one other base stations as new at least one neighboring base stations, repeating the steps d' to g, until predetermined condition is fulfilled.

6. A method according to claim 5, wherein the predetermined condition comprises any one of the followings:
- Combining all neighboring base stations which serve the mobile station to perform the joint detection and combination;
- Combining partial neighboring base stations which serve the mobile station to perform the joint detection and combination, and detecting user data correctly;
- the time for sending ACK or NACK message to the mobile station reaches.

7. A method according to claim 1, wherein the step b further comprises;
- sending the first ACK message to the mobile station.

8. A method according to any one of claims 1 to 7, wherein the serving base station applies non-coherent detection approach, the user data includes soft bit information.

9. A method according to any one of claims 1 to 7, wherein the serving base station apples coherent detection approach, the user data includes signal symbol quantified value and channel state information.

10. A method according to any one of claims 4 to 6, wherein the local detection includes maximum ratio combining, minimum mean square error detection or minimum mean square error-successive interference cancellation, maximum likelihood sequence detection, decorrelating detection, parallel interference cancellation or decorrelating decision feedback.

11. A method, in a neighboring base station in a coordinated multi-point transmission network, of coordinating a multi-point transmission management equipment to control user data of an uplink multi-point transmission mobile station, the method comprising the steps of:
A. determining whether ACK or NACK message is received from the coordinated multi-point transmission management equipment;
B. discarding the user data, when ACK message is received from the coordinated multi-point transmission management equipment.

12. A method according to 11, wherein after step A, the method comprises the step of:
B'. sending the user data to the coordinated multi-point transmission management equipment, then discarding the user data, when NACK message is received from the coordinated multi-point transmission management equipment.

13. A method according to 11 or 12, wherein before step B or B', the method comprises the step of:
- detecting user data from the mobile station locally.

14. A method according to any one of claims 11 to 13, wherein the serving base station applies non-coherent detection approach, the user data includes soft bit information.

15. A method according to any one of claims 11 to 13, wherein the serving base station applies coherent detection approach, the user data includes signal symbol quantified value and channel state information.

16. A method according to any one of claims 13 to 15, wherein the local detection includes maximum ratio combining, minimum mean square error detection or minimum mean square error-successive interference cancellation, maximum likelihood sequence detection, decorrelating detection, parallel interference cancellation or decorrelating decision feedback.

17. A management apparatus of controlling user data of an uplink multi-point transmission mobile station in a coordinated multi-point transmission management equipment in a coordinated multi-point transmission network, wherein, one or more base stations and the coordinated multi-point transmission management equipment serve the mobile station coordinately, the management apparatus comprises:
a first determining means, for determining whether it is necessary to send a first ACK message or a first NACK message to at least one of the one or more neighboring base stations;
a first sending means, for sending the first ACK message to all of the one or more neighboring base stations, when it is necessary to send the first ACK message to the at least one neighboring base station, wherein the first ACK message is used to indicate that the all neighboring base stations do not need to send the user data obtained by the neighboring base stations to the coordinated multi-point transmission management equipment.

18. A management apparatus according to claim 17, wherein the first sending means is further used for:
sending the first NACK message to the at least one neighboring base station, when it is necessary to send the first NACK message to the at least one neighboring base station, wherein the first NACK message is used to indicate that the at least one neighboring base station needs to send the user data obtained by the at least one neighboring base station to the coordinated multi-point transmission management equipment.

19. A management apparatus according to claim 17 or 18, wherein the first determining means is further used for, determining whether the user data can be detected correctly through local detection;
- determining that it is necessary to send the all neighboring base stations the first ACK message, if the user data can be detected correctly; determining that it is necessary to send the first NACK message to the at least one neighboring base station, if the user data cannot be detected correctly.

20. A management apparatus according to claim 18, wherein the management apparatus further comprises:
a receiving means, for receiving user data from the at least one neighboring base station;
a combining means, for performing joint detection and combination, according to user data in the coordinated multi-point transmission management equipment and user data from the at least one neighboring base station.

21. A management apparatus according to claim 20, wherein the first determining means is further used for, determining whether the user data can be obtained correctly according to the joint detection and combination;
- determining that it is necessary to send a second ACK message to all other neighboring base stations which have not participated in the joint detection and combination, if the user data can be obtained correctly, the first sending means is further used for sending the second ACK message;
- determining that it is necessary to send a second NACK message to at least one of the other neighboring base stations which have not participated in the joint detection and combination, if the user data cannot be obtained correctly, the first sending means is further used for sending the second NACK message;
the receiving means is further used for, receiving user data from the at least one of the other base stations which have not participated in the joint detection and combination;
the combining means is further used for, setting the at least one neighboring base stations and the at least one other base stations as new at least one neighboring base stations, repeating the operation executed by the first determining means, the first sending means, the first receiving means and the combining means, until predetermined condition is fulfilled.

22. A management apparatus according to claim 21, wherein the predetermined condition comprises any one of the followings:
- Combining all neighboring base stations which serve the mobile station to perform the joint detection and combination;
- Combining partial neighboring base stations which serve the mobile station to perform the joint detection and combination, and detecting user data correctly;
- the time for sending ACK or NACK message to the mobile station reaches.

23. A management apparatus according to claim 17, wherein the first sending means is further used for:
- sending the first ACK message to the mobile station.

24. A management apparatus according to any one of claim 17 to 23, wherein the serving base station applies non-coherent detection approach, the user data includes soft bit information.

25. A management apparatus according to any one of claim 17 to 23, wherein the serving base station apples coherent detection approach, the user data includes signal symbol quantified value and channel state information.

26. A management apparatus according to any one of claim 20 to 22, wherein the local detection includes maximum ratio combining, minimum mean square error detection or minimum mean square error-successive interference cancellation, maximum likelihood sequence detection, decorrelating detection, parallel interference cancellation or decorrelating decision feedback.

27. An assisting apparatus, in a neighboring base station in a coordinated multi-point transmission network, of coordinating a multi-point transmission management equipment to control user data of an uplink multi-point transmission mobile station, the assisting apparatus comprises:
a second determining means, for determining whether ACK or NACK message is received from the coordinated multi-point transmission management equipment;
a flushing means, for discarding the user data, when ACK message is received from the coordinated multi-point transmission management equipment.

28. An assisting apparatus according to claim 27, wherein the assisting apparatus further comprises:
a second sending means, for sending the user data to the coordinated multi-point transmission management equipment, then discarding the user data, when NACK message is received from the coordinated multi-point transmission management equipment.

29. An assisting apparatus according to claim 27 or 28,wherein the assisting apparatus further comprises:
a detecting means, for detecting user data from the mobile station locally.

30. An assisting apparatus according to any one of claims 27 to 29, wherein the serving base station applies non-coherent detection approach, the user data includes soft bit information.

31. An assisting apparatus according to any one of claims 27 to 29, wherein the serving base station applies coherent detection approach, the user data includes signal symbol quantified value and channel state information.

32. An assisting apparatus according to any one of claims 27 to 31, wherein the local detection includes maximum ratio combining, minimum mean square error detection or minimum mean square error-successive interference cancellation, maximum likelihood sequence detection, decorrelating detection, parallel interference cancellation or decorrelating decision feedback.

33. A coordinated multi-point transmission management equipment, including a management apparatus of controlling user data of an uplink multi-point transmission mobile station according to any of claims 17 to 26.

34. A base station, including an assisting apparatus of coordinating a multi-point transmission management equipment to control user data of an uplink multi-point transmission mobile station according to any of claims 27 to 32.
